# EUROPÄISCHE PATENTANMELDUNG

(11) **EP 2 323 068 A1**
(43) Veröffentlichungstag der Anmeldung: **18.05.2011**
(21) Anmeldenummer: 10010987.5
(22) Anmeldetag: 28.09.2010
(51) Int. Cl.: G06K 7/00

(54) **Kartenleser mit einem Blockiermittel zum Verhindern des Fehlsteckens einer Karte**

(30) Priorität: 14.11.2009 DE 102009053362
(71) Anmelder: Amphenol-Tuchel Electronics GmbH, 74080 Heilbronn (DE)
(72) Erfinder: Schewe, Eckhard, 74074 Heilbronn (DE)
(74) Vertreter: Wendels, Stefan

(57) **Zusammenfassung**

Die Erfindung betrifft eine Kartenkontaktiervorrichtung für Karten mit einer Fase an ihrer vorderen Stirnseite umfassend einen Kontaktträger und einen am Kontaktträger befestigten Deckel unter Bildung eines Kartenaufnahmeraums zwischen dem Kontaktträger und dem Deckel, wobei ferner ein Karteneinschubschlitz zum Einführen einer Karte in den Kartenaufnahmeraum vorgesehen ist, wobei ein Blockiermittel für eine Karte im Kartenaufnahmerum so angeordnet ist, dass eine Karte mit einer an ihrer vorderen Stirnseite vorhandenen Kartenkante beim Einschieben der Karte am Blockiermittel so blockiert wird, dass ein weiteres Einschieben der Karte verhindert wird.

## Beschreibung

### Kartenleser mit einem Blockiermittel zum Verhindern des Fehlsteckens einer Karte

Die Erfindung bezieht sich auf eine Kartenkontaktiervorrichtung gemäß dem Oberbegriff von Anspruch 1.

Die vorliegende Erfindung bezieht sich insbesondere auf eine gattungsgemäße Kartenkontaktiervorrichtung, bei der das Einstecken einer für den Kartenleser bestimmten Karte In einer nicht bestimmungsgemäßen Position verhindert werden soll.

Im Stand der Technik sind unterschiedliche Kartenkontaktiervorrichtungen und Kartenieser bekannt, bei dem Vorrichtungen zur Verhinderung des Einlegens einer Karte in einer falschen Kartenposition vorhanden sind.

Aus der DE 199 28 744 A1 ist beispielsweise ein Kartenleser mit einem schwenkbaren Deckel bekannt, bei dem der Kontaktträger über eine Schräge verfügt, die gewährleisten soll, dass bestimmungsgemäße Karten, die über eine korrespondierende Schräge an der Kartenkante verfügen, nur in der dafür vorgesehenen korrekten Position in den Kartenleser eingebracht werden können.

Beim Einlegen der Karte in einer nicht bestimmungsgemäßen Position, verhindert die angebrachte Schräge ein Schließen des Deckels. Dies stellt allerdings lediglich ein Blockiermittel dar, welches verhindert, den Deckel zu schließen, sofern ein Klapp-, Schiebedeckel oder ein beweglicher Deckel am Kartenleser oder an der Kartenkontaktlervorrichtung angebracht Ist. Es verhindert nicht das fehlerhafte Einbringen der Karte und mögliche Beschädigungen.

Im Stand der Technik sind ähnliche Kartenkontaktiervorrichtungen bekannt, die über einen festen mit dem Kontaktträger verbundenen Deckel verfügen. In diesen Kartenlesern wird dem der Einführseite gegenüberliegenden Ende eine entsprechende Schräge angeordnet, so dass eine Karte, die falsch herum eingelegt wurde, nicht vollständig in den Kartenaufnahmeraum eingeschoben werden kann.

Allerdings werden bei diesen Kartenlesern die Karten bereits in eine Position gebracht, bei dem der Benutzer der Kartenkontaktiervorrichtung erst sehr spät feststellt, dass er die Karte nicht in der bestimmungsgemäßen Position in den Kartenleser eingeführt hat.

So kann es z. B, beim gewaltsamen Schließen bei einem Klapp-, Schiebedeckel zu Schäden oder Zerstörung am Kartenleser kommen.

Bei einem Kartenleser bei dem ein Deckel fest mit dem Kontaktträger verbunden ist, merkt der Benutzer allenfalls erst nach dem die Karte fast vollständig eingeschoben wurde, dass die Karte in einer falschen Position in den Kartenaufnahmeraum eingebracht wurde.

Teilweise versuchen die Benutzer, die Karte gewaltsam den verbleibenden Weg, in den Kartenleser hinein zu schieben und zerstören dabei entweder Karte oder Kartenleser. Nachteilig ist dabei auch, dass nur bei Karten mit einer solchen Schräge, eine zuvor beschriebene Funktionsweise denkbar ist.

Nachteilig ist ferner, dass die Einschubtiefe auch bei unbeabsichtigt, falschem Stecken in einer spiegelbildlichen Position nur bestimmt wird, durch die Geometrie der Karte.

Verfügt eine Karte beispielsweise überhaupt nicht über eine solche Schräge, so scheidet ein zuvor genanntes Kartenblockiermittel zur Verhinderung von falschem Stecken aus.

Weiterer Nachteil der bekannten Karteniesern liegt darin, dass teilweise die Kontakte so im Kontaktträger angeordnet sind oder angeordnet sein müssen, dass diese beim Einschieben der Karte in einer falschen Position zerstört werden bzw. verbogen werden. Dadurch wird der Kartenleser unbrauchbar.

Aufgabe der vorliegenden Erfindung liegt somit darin, eine Kartenkontaktiervorrichtung bereit zu stellen, die vorbesagte Nachteile nicht aufweist und verhindert, dass eine Karte unabhängig von ihrem individuellen Kartenformat, sprich von der Kartenbreite in einer nicht bestimmungsgemäßen Position in den Kartenleser eingeführt werden kann. Daneben soll vermieden werden, dass bei Fehlstecken mit einer Karte in einer nicht bestimmungsgemäßen Position die Lesekontakte im Kontaktträger und damit in der Kartenkontaktiervorrichtung zerstört werden, beziehungsweise die Lesekontakte beliebig orientiert angeordnet werden können, ohne dass die Gefahr einer Schädigung durch Fehlstecken auftrifft.

Zur Lösung der der Erfindung zu Grunde liegenden Aufgabe wird erfindungsgemäß eine Kartenkontaktiervorrichtung in der in den unabhängigen Ansprüchen angegebene Art und Weise ausgebildet.

Bevorzugte Ausgestaltungen der Erfindung ergeben sich aus den Unteransprüchen.

Weitere Vorteile, Ziele und Einzelheiten der Erfindung ergeben sich aus der Beschreibung von Ausführungsbeispielen anhand der Zeichnung. In der Zeichnung zeigt:
Fig. 1 einen Schnitt durch den erfindungsgemäßen Kartenleser, bei dem die Karte in einer nicht bestimmungsgemäßen Einschubposition teilweise in den Kartenleser eingeschoben ist;
Fig. 2 eine Draufsicht auf einen erfindungsgemäßen Kartenleser gemäß Fig. 1;
Fig. 3 eine Schnittansicht durch den erfindungsgemäßen Kartenleser, bei dem die Karte bestimmungsgemäß in den Kartenaufnahmeraum eingeführt wurde;
Fig. 4 zeigt eine Detailansicht des Blockiermittels mit einem Kartendetail einer Karte mit einer Fase in der bestimmungsgemäßen Orientierung beim Auftreffen auf das Blockiermittel;
Fig. 5 zeigt eine Detailansicht des Blocklermittels mit einem Kartendetall einer Karte mit einer Fase in der nicht bestimmungsgemäßen - sprich falschen - Orientierung beim Auftreffen auf das Blockiermittel.

Die erfindungsgemäße Kartenkontaktiervorrichtung löst die zuvor beschriebene Aufgabe dadurch, dass ein Blockiermittel im Karteneinschubbereich, jedenfalls so vor den Lesekontakten im Kartenaufnahmeraum angeordnet wird, dass eine Karte, welche gattungsgemäß über keine Fase an ihrer Stirnseitenkante verfügt, nicht an dem Blockiermittel vorbei in den Kartenaufnahmeraum eingeschoben werden kann.

Vorzugsweise wird das Blockiermittel als eine quer durch den Kartenleser verlaufende treppenartige Stufe ausgebildet, welche mit einer Kante versehen ist.

Wesentlich für das Funktionieren der Blockade mittels eines solchen Blockiermittels ist, dass die Kante als an der Stufe Kante ohne Fase ausgebildet wird. Hierdurch treten erhebliche mechanische Kräfte auf, welche bei entsprechender geometrischer Auslegung des Blockiermittels dazu führen, dass eine Karte ohne eine bestimmungsgemäß angebrachte Fase an ihrer Stirnseitenkante nicht in den Kontaktaufnahmeraum des Kartenlesers eingeschoben werden kann. Wesentlich ist dabei, dass der Kartenaufnahmeraum hinter der Stufe in etwa der Kartendicke entspricht.

Das Blockiermittel arbeitet dabei auf eine verblüffend einfache, aber effektive Weise, wodurch ohne aufwendige konstruktive Maßnahmen, Karten unabhängig von ihrem Kartenformat an dem stufenförmigen Blockiermittel, sprich an der Kante, mittels ihrer Stimseitenkante, blockiert werden, während im bestimmungsgemäßen Einsatz in der richtigen Position der Karte nicht die Kartenkante, sondern die Fase an der Kartenkante auf die Stufe trifft und diese am Blockiermittel entlang gleiten lässt. Trifft allerdings die nicht gefaste Kartenkante auf die Kante der Stufe, lässt sich damit das Einschieben der Karte verhindern. Trifft jedoch die Kartenkante mit ihrer Fase auf die Stufe, so wirkt das Blockiermittel als Führungsmittel.

Hierbei sei allerdings erwähnt, dass die vorliegende Erfindung nur für gattungsgemäße Karten funktioniert, die an ihrer Stirnseitenkante über eine Fase verfügen.

Sofern beim bestimmungsgemäßen Einschieben der Karte die Fase an der Oberseite zu liegen kommen sollte, kann das Blockiermittel statt am Kontaktträger auch am Deckel angeordnet sein.

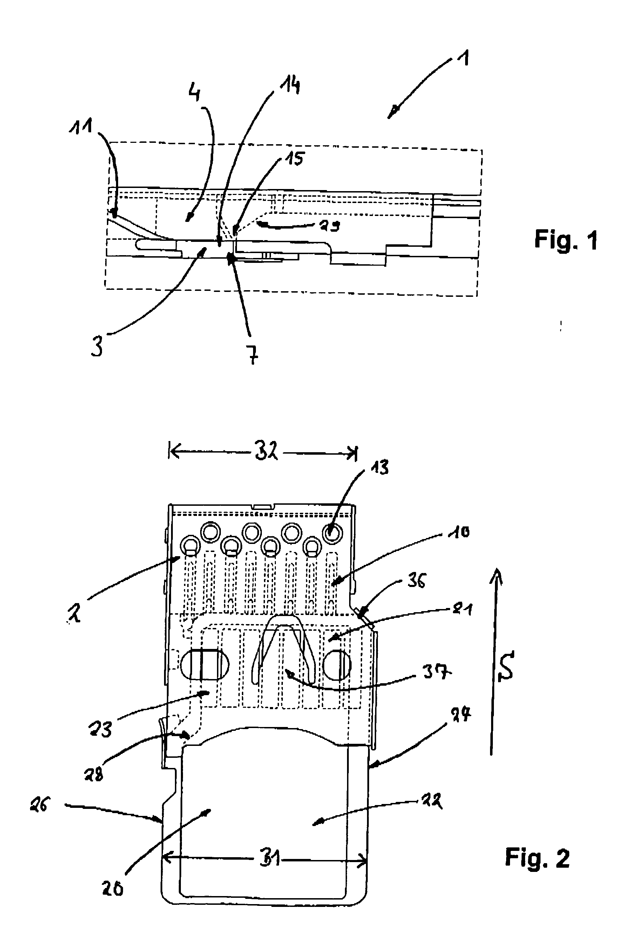

Fig. 1 zeigt eine Seitenansicht einer erfindungsgemäßen Kartenkontaktiervorrichtung 1. Die Kartenkontaktlervorrichtung 1 verfügt über einen Kontaktträger 3 an der Unterseite und einem daran fest montiertern Deckel 2. Der Deckel 2 kann mit Vorteil mittels Haltemitteln 39 am Kontaktträger 3 mechanisch befestigt sein. Zwischen dem Deckel 2 und dem Kontaktträger 3 befindet sich der Kartenaufnahmeraum 4, in welche eine gattungsgemäße Karte 20 eingeschoben werden kann. Der Kontaktträger 3 verfügt über einen Kontaktträgerboden 5 mit einem Kontaktträgerbodenabschnitt 9, in dem Lesekontakte 10 angeordnet sind.

Am einsteckseitigen Ende der Kartenkontaktiervorrichtung 1 befindet sich ein Karteneinschubschlitz 6 zum Kartenaufnahmeraum 4. Am Einschubsschlitz 6 folgt in Steckrichtung S ein vorderer Kartenaufnahmeraum 8a und ein hinterer Kartenaufnahmeraum 8b. Im hinteren Kartenaufnahmeraum 8b weist der Kontaktträger 3 ein Kontaktträgerbodenabschnitt 9 auf, in dem besagte Lesekontakte 10 angeordnet sind.

Am Übergang des vorderen Kartenaufnahmeraums 8a zum hinteren Kartenaufnahmeraum 8b befindet sich ein Blockiermittel 7, welches durch den Kontaktträger 3 gebildet und mit diesem formschlüssig und mit Vorteil einstückig verbunden ist.

Alternativ könnte das Blockiermittel 7 auch als separates Blockiermittel am Kontaktträger 3 in zweiteiliger Ausführung angeordnet sein.

Wesentlich für die Ausführung des Blockiermittels 7 ist die wie in Fig. 1 dargestellte Ausprägung des Blockiermittels 7 als Stufe 14 mit einer mehr oder weniger scharfen Kante 15. Hierbei ist darauf zu achten, dass die Kante 15 nicht abgerundet ist oder über eine Fase verfügt, da nur auf dieser Art und Weise verhindert werden kann, dass eine Karte 20 in den hinteren Kartenaufnahmeraum 8b weiter eingeschoben werden kann, sofern die Karte mit ihrer an der vorderen Stirnseite 24 angeordneten Kartenkante 25 auf die Stufe 14 trifft.

In Fig. 2 ist ersichtlich, dass der Deckel 2 über eine Deckelfeder 37 verfügt. Die Deckelfeder 37 befindet sich in etwa oberhalb der Position des Blockiermittels 7 und ragt in den Kartenaufnahmeraum 4.

Hierdurch wird gewährleistet, dass durch die Deckelfeder 37 beim Einführen einer Karte 20 in den Kartenaufnahmeraum 4 die Karte nach unten auf die Oberseite des Kontaktträgerbodens 5 gedrückt wird und dadurch sicher gestellt wird, dass wahlweise die vordere Stirnseite der Karte 24 mit ihrer Kante 25 oder mit ihrer Fase 29 auf die Stufe 14, sprich die Kante 15. trifft.

Die erfindungsgemäße Kartenkontaktiervorrichtung nutzt dabei den Effekt aus, dass nur Karten, welche an der vorderen steckseitigen Kartenkante 24 über eine Fase 29 verfügen, bestimmungsgemäß in die Kartenkontaktiervorrichtung 1 eingeführt werden können.

Die Karte gemäß dem Beispiel aus Fig. 1 bis Fig. 3 verfügt über einen vorderen steckseitigen Kartenabschnitt 21, in dem nicht dargestellte Kontaktpads 23 angeordnet sind und einem sich daran anschließenden hinteren Kartenabschnitt 22, welcher breiter ausgebildet ist, als der vordere steckseltige Kartenabschnitt 21.

Der hintere Kartenabschnitt 22 verfügt über eine Kartenbreite B1, die in etwa der Breite des Einschubschlitzes 6 im vorderen Kartenaufhahrneraum 8a entspricht. Die vordere Kartenbreite B2 entspricht der Breite des Kartenaufnahmeraumes 8b. Zwischen dem vorderen steckseitigen Kartenabschnitt 21 und dem hinteren Kartenabschnitt 22 befindet sich eine Schräge 28, die dadurch gebildet ist, dass die erste Kartenseitenfläche 26 und die zweite Kartenseitenfläche 27 nicht durchgehend parallel, sondern abgesetzt parallel zueinander verlaufen. Hierdurch wird zwischen den beiden seitlichen Kartenseitenflächen 26, 27 eine Schräge 28 gebildet.

Die Karte 20 verfügt über eine vordere Stirnseite 24, wobei diese mit der Kartenunterseite 40 eine Fase 29 bildet, während die vordere Stirnseite 24 mit der Kartenoberseite 41 eine Kante 25 bildet.

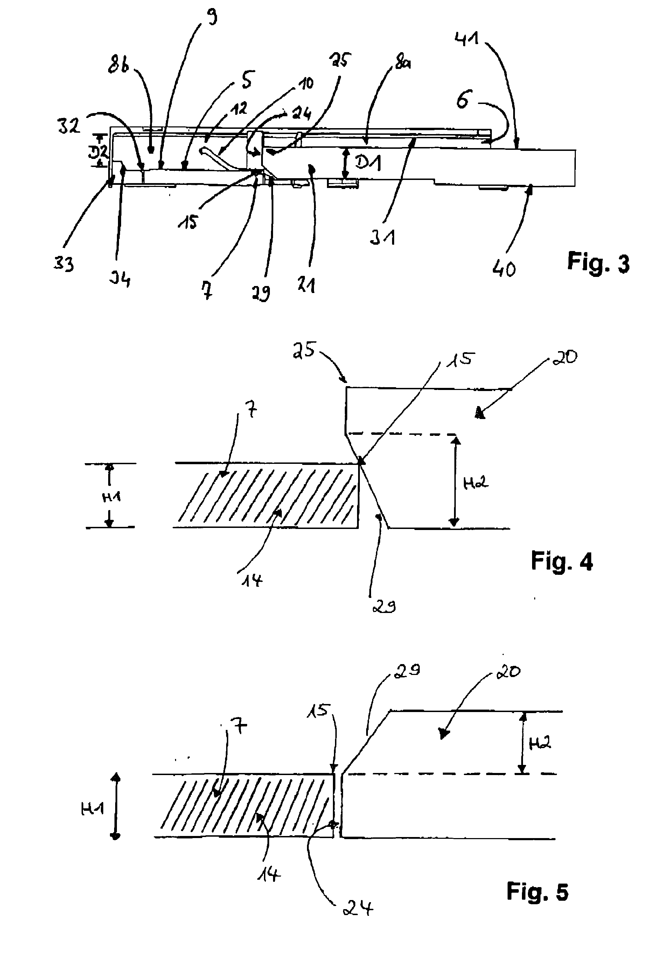

Wie Fig. 3 zu entnehmen ist, verfügt der Kontaktträger 3 im hinteren Kartenaufnahmeraum 8b über einen Kartenanschlag 33, welcher ebenfalls mit einer Fase 34 ausgebildet ist. Wird die Karte 20 nun wie in Fig. 3 in Steckrichtung S in den Kartenaufnahmeraum 4 der Kartenkontaktiervorrichtung eingeschoben, so wird sie durch die Deckelfeder 37 während des bestimmungsgemäßen Einschiebens nach unten gedrückt und trifft mit ihrer Fase 29 an der vorderen Stirnseite 24 auf die Kante 15 und an der Stufe 14. Bei weiterem Einschieben gleitet die Karte mit ihrer Fase 29 über die Kante 15 in den Kartenaufnahmeraum 4, bis sie letztendlich nach vollständigem Einschieben am Anschlag 33 an der dort ausgebildeten Fase 34 zum Anliegen kommt, währenddessen die Deckelfeder die Karte 20 permanent in Richtung Kontaktträgerboden 5 drückt.

Wie weiter in Fig. 3 ersichtlich ist, verlaufen die Lesekontakte 10 mit ihren Kontaktarmen 11 in Steckrichtung S derart, dass bei einem Einstecken einer falschen, beispielsweise dünnerer Karte, die Lesekontakte nicht gestaucht oder verbogen werden können, da diese sich federnd nach unten in den Kontaktträger 3 absenken können.

Im Bereich des hinteren Kartenaufnahmeraums 8b befindet sich ein Kontaktträgerabschnitt 9, welcher mit der Deckelunterseite 31 einen Kartenaufnahmeraum der Höhe D2 bildet, welche in etwa der Kartendicke D1 einer bestimmungsgemäß auf zunehmenden Karte 20 entspricht bzw. etwas vergrößert zu dieser ausgebildet ist. Somit tauchen bei voll eingesteckter Karte bis zur Leseposition die Lesekontakte 10 ab und drücken in folge ihrer Rückstellkraft die Karte 20 in Richtung die Deckelunterseite 31, womit die Karte in ihrer Leseposition zwischen der Deckelfeder 37 und den Lesekontakten 10 gehalten wird. Der Halteeffekt wird zusätzlich einstellbar durch die Deckelfeder 37, welche entsprechend ihrem Anstellwinkel auf die gewünschte Andruckkraft eingestellt werden kann.

In den Fig. 4 und 5 sind jeweils Detailansichten des Blockiermittels 7 gezeigt, welches ausgebildet ist als Stufe 14 mit einer Höhe H1.

In der Fig. 4 wird ebenfalls eine Detailansicht einer Karte 20 gezeigt, welche bis zum Blockiermittel 7 vorgeschoben wurde und mit ihrer Fase 29 an der Kante 15 der Stufe 14 anliegt. Deutlich zu erkennen ist, dass die Höhe H2 der Fase 29 größer ausgebildet ist als die Höhe H1 an der Stufe 14. Anders ausgedrückt, muss der Kartenleser mit seinem Blockiermittel 7 und daher mit seiner Höhe H1 der Stufe 14 so auf eine bestimmungsgemäße Karte 20 abgestimmt sein, dass die Höhe H1 jedenfalls kleiner ausgebildet ist als die Höhe H2 der Fase 29 einer bestimmungsgemäßen Karte 20.

Der Anstellwinkel α der Fase 29 gegenüber der Kartenunterseite soll mit Vorteil zwischen 30° und 60° betragen. Ein Winkel von 36° bis 42° hat sich als besonders vorteilhaft erwiesen, da bei einer solchen Winkelstellung die Karte mit geringem Aufwand an der Stufe 14 vorbei geschoben werden kann, indem sich die Fase 29 entlang der Kante 15 bewegt bis die Karte 20 mit ihrer Kartenunterseite über die Stufe 14 gleitet und infolge dessen weiter in den hinteren Kartenaufnahmeraum 8b eingeschoben werden kann.

Mit Vorteil ist die Höhe H1 der Stufe 14, wie in Fig. 4 gezeigt, geringer ausgebildet, als die Höhe H2 der Fase 29. Hierdurch wird durch einfache geometrische Anordnung gewährleistet, dass beim bestimmungsgemäßen Einschieben der Karte in der richtigen Orientierung immer ein Abschnitt der Fase 29 auf die Kante 15 der Stufe 14 trifft, während umgekehrt, wie in Fig. 5 dargesteilt, bei einem falschen Einschieben der Karte in einer ungewünschten Position, immer die Kante 25 auf die Stufe 14 trifft.

In Fig. 5 ist eine Karte 20 in der nicht bestimmungsgemäßen Orientierung bis zur Stufe 14, somit zum Blockiermittel 7 im Kartenaufnahmeraum 4 eingeschoben, dargestellt.

Hierbei wird ersichtlich, dass die Karte 20 insofern nicht mit ihrer Fase 29 mit dem Blockiermittel 7 zusammenarbeiten kann, sondern stattdessen, mit ihrer vorderen Stirnseite 24 auf die Stufe 14 auftrifft und von dieser blockiert wird.

Da zusätzlich mit Vorteil eine Deckelfeder 37 auf die Oberseite der Karte 20 drückt, ist auf einfache Weise gewährleistet, dass die Karte 20 in einer nicht bestimmungsgemäßen Orientlerung nicht in den Kartenaufnahmeraum 4 weiter eingeschoben werden kann.

Hierdurch wird auf einfache konstruktive Weise ein Blockiermittel 7 bereitgestellt, welches verhindert, dass eine Karte 20 in verkehrter Lage oder Position in die Kartenkontaktiervorrichtung eingeschoben werden kann.

Zusätzlich besteht die Möglichkeit, eine Schräge 36 an der Kartenkontaktiervorrichtung 1 vorzusehen, die gewährleistet, dass nur eine Karte, welche eine Geometrie wie in Fig. 2 dargestellt, aufweist, in den Kartenleser eingeführt werden kann.

Mit Vorteil wird diese Schräge so angeordnet, dass sie als Anschlag für die Kartenschräge 28 bei korrekt eingeschobener Karte dienen kann.

Der Anstellwinkel α der Fase 29 gegenüber der Kartenunterseite soll mit Vorteil zwischen 30° und 60° betragen. Ein Winkel von 36° bis 42° hat sich als besonders vorteilhaft erwiesen.

### Bezugszeichenliste

Kartenleser mit einem Blockiermittel zum Verhindern des Fehlsteckens einer Karte
- 1: Kartenkontaktiervorrichtung
- 2: Deckel
- 3: Kontaktträger
- 4: Kartenaufnahmeraum
- 5: Kartenträgerboden
- 6: Karteneinschubschlitz
- 7: Blockiermittel
- 8a: vorderer Kartenaufnahmeraum
- 8b: hinterer Kartenaufnahmeraum
- 9: Kontaktträgerbodenabschnitt
- 10: Lesekontakte
- 11: Kontaktarme
- 12: Kontaktkuppen
- 13: Löcher
- 14: Stufe
- 15: Kante
- 21: vorderer steckseitiger Kartenabschnitt
- 22: hinterer Kartenabschnitt
- 23: Kontaktpads
- 24: vordere Stirnseite
- 25: Kartenkante
- 26: erste Kartenseitenfläche
- 27: zweite Kartennseitenfläche
- 28: Schräge
- 29: Fase

- 31: Deckelunterseite
- 32: Kontaktträgerbodenoberseite
- 33: Anschlag
- 34: Fase
- 36: Schräge
- 37: Deckelfeder
- 39: Haltemittel
- 40: Kartenunterseite
- 41: Kartenoberselte
- B1: Kartenbreite
- B2: hintere Deckelbreite
- D1: Kartendicke
- D2: Höhe Kartenaufnahmeraum
- H1: Höhe der Stufe 14
- H2: Höhe der Fase
- S: Steckrichtung

## Patentansprüche

1. Kartenkontaktiervorrichtung (1) für Karten (20) mit einer Fase (29) an ihrer vorderen Stirnseite (24) umfassend einen Kontaktträger (3) und einen am Kontaktträger (3) befestigten Deckel (2) unter Bildung eines Kartenaufnahmeraums (4) zwischen dem Kontaktträger (3) und dem Deckel (2), wobei ferner ein Karteneinschubschlitz (6) zum Einführen einer Karte (20) in den Kartenaufnahmeraum (4) vorgesehen ist, **dadurch gekennzeichnet, dass** ein Blockiermittel (7) für eine Karte (20) im Kartenaufnahmerum (4) so angeordnet ist, dass eine Karte (20) mit einer an ihrer vorderen Stirnseite (24) vorhandenen Kartenkante (25) beim Einschieben der Karte am Blockiermittel (7) so blockiert wird, dass ein weiteres Einschieben der Karte (20) verhindert wird.

2. Kartenkontaktiervorrichtung (1) gemäß Anspruch 1, **dadurch gekennzeichnet, dass** der Kartenaufnahmeraum (4) aus einem vorderen Kartenaufnahmeraum (8a) und einem hinteren Kartenaufnahmeraum (8b) gebildet ist, wobei am Übergang zwischen den beiden Kartenaufnahmeräumen (8a, 8b) das Blockiermittel (7) angeordnet ist.

3. Kartenkontaktiervorrichtung (1) gemäß Anspruch 1 oder 2, **dadurch gekennzeichnet, dass** das Blockiermittel (7) als Stufe (14) ausgebildet ist.

4. Kartenkontaktiervorrichtung (1) gemäß Anspruch 3, **dadurch gekennzeichnet, dass** die Stufe (14) über eine Kante (15) verfügt.

5. Kartenkontaktiervorrichtung (1) gemäß einem der vorhergehenden Ansprüche, **dadurch gekennzeichnet, dass** das Blockiermittel (7) quer zur Einsteckrichtung S einer Karte (20) im Kartenaufnahmeraum (4) angeordnet ist.

6. Kartenkontaktiervorrichtung (1) gemäß einem der vorhergehenden Ansprüche, **dadurch gekennzeichnet, dass** die Höhe D2 des Kartenaufnahmeraums (8b) zwischen dem Deckel (2) und dem Kontaktträger (3) in etwa der Dicke D1 einer bestimmungsgemäßen Karte (20) entspricht.

7. Kartenkontaktiervorrichtung (1) gemäß einem der vorhergehenden Ansprüche, **dadurch gekennzeichnet, dass** der Deckel (20) über eine Deckelfeder (37) verfügt, welche sich in den Kartenaufnahmeraum (4) erstreckt.

8. Kartenkontaktiervorrichtung (1) gemäß Anspruch 7, **dadurch gekennzeichnet, dass** sich die Deckelfeder (37) so in den Kartenaufnahmeraum (4) erstreckt, dass eine Karte (20) beim Einschieben in den Kartenaufnahmeraum (4) durch die Deckelfeder (37) mittels Federkraft beaufschlagt wird und **dadurch** eine Zwangsführung in Richtung des Kontaktträgers (3) erfährt.

9. Kartenkontaktiervorrichtung (1) gemäß einem der Ansprüche 3 bis 8, **dadurch gekennzeichnet, dass** die Höhe H1 der Stufe (14) zwischen 30% bis 50 % der Kartendicke D1 einer bestimmungsgemäßen Karte (20) entspricht.

10. Kartenkontaktiervorrichtung (1) gemäß einem der vorhergehenden Ansprüche, **dadurch gekennzeichnet, dass** der Kontaktträger (3) über einen Kartenträgerboden (5) zur Auflage einer Karte (20) verfügt wobei die Lage des Kartenträgerbodens (5) im Bereich des vorderen Kartenaufnahmeraums (8a) nach unten in der Höhe abgesetzt ist gegenüber der Lage des Kartenträgerbodens (5) im Bereich des hinteren Kartenaufnahmeraums (8b).

11. Kartenkontaktiervorrichtung (1) gemäß einem der Ansprüche 3 bis 10, **dadurch gekennzeichnet, dass** die Stufe (14) mit ihrer Kante (15) so ausgebildet ist, dass eine bestimmungsgemäße Karte (20) beim Einschieben in den Kartenaufnahmeraum (4) in ihrer bestimmungsgemäßen Orientierung an dem Blockiermittel (7) entlang, mit Vorteil nach oben in Richtung des Deckels geführt wird und **dadurch** vollständig in die Kartenkontaktiervorrichtung (1) eingebracht werden kann.
